# EUROPEAN PATENT APPLICATION

(11) **EP 1 220 515 A2**
(43) Date of publication of application: **03.07.2002**
(21) Application number: 01128256.3
(22) Date of filing: 28.11.2001
(51) Int. Cl.: H04M 1/02

(54) **Portable phone with auxiliary display**

(30) Priority: 29.12.2000 US 752971
(71) Applicant: Gateway, Inc., North Sioux City, South Dakota 57049 (US)
(72) Inventor: Flannery, Michael R., Sioux City, IA 51106 (US)
(74) Representative: Viering, Jentschura & Partner

(57) **Abstract**

A portable phone is adapted to attach to a user and has primary and auxiliary displays angled with respect to each other. The auxiliary display is oriented so that, when the phone is attached to the user, the auxiliary display is readable to the user. When the phone receives a call, the auxiliary display preferably shows caller ID information for the call. In another embodiment, a portable phone has a primary display and an auxiliary display, and the phone has two sections that fold together. When the phone is closed, the auxiliary display is readable to the user and preferably displays caller ID information of incoming calls. Preferably, the primary display is covered by the two sections of the phone when it is folded. In another embodiment, a portable phone has a display that comprises two portions that are angled with respect to each other, the display oriented on the phone so that when the phone is attached to a user, one of the portions of the display is readable to the user.

## Description

### BACKGROUND OF THE INVENTION

The invention relates to portable phones, and, more specifically, to portable phones having an auxiliary display that is readable to a user when the phone is attached to the user.

Many portable and cellular phones now have the ability to display caller ID information and to act as pagers with alpha-numeric text strings being displayed on their display. When a phone is carried on a user (e.g., on a belt clip), however, its display is often not visible to the user unless the user detaches the phone, pivots it, or contorts the user's body to read it. Additionally, in the case of folding phones, the display is not visible at all when the cover is closed, regardless of whether it is carried on the user.

Many cellular phones have swiveling or rotating belt clips that allow a user to turn the phone and, perhaps, view the display. The obvious disadvantage of this method of viewing the display is that it requires manual interaction, tying up one or more of the user's hands to access the features of the phone. In addition to being inconvenient, requiring manual interaction diminishes safety at times when the user needs both hands free, for example, to drive a car.

Pagers, like portable phones, are often carried on a user's belt or other article of clothing and often have a single display that is viewable to a user when it is being carried. Pagers display a callback number, which is a number that another caller chooses to send to the page recipient. Portable phones, on the other hand, typically display caller ID information, which may include the phone number from which the call is coming, the name of the person registered to that phone number, and a date and time stamp. Caller ID information has a different utility than callback numbers; the former represents information regarding a current event (i.e., a current phone call) and can be used to screen calls while the latter is merely a short message sent by a caller in the past. Therefore, the pager prior art does not address the problem of providing easy access to display information for portable phones.

Also, pagers typically have a single display, which is usually positioned on their relatively narrow top sides. For portable phones, however, the display typically includes more information and thus must be larger than a pager's display. Furthermore, a phone's display is usually located on the same side as its keypad so a user can see both the display and the keypad at the same time. The size of the display and the desire to have it on the same face as the keypad, therefore, are barriers to placing a phone's display on its relatively narrow top side. Pagers do not face this problem, so the pager prior art is not relevant to solving it.

### SUMMARY OF PREFERRED EMBODIMENTS

In one preferred embodiment, a portable phone adapted to attach to a user (e.g., by a belt clip) has primary and auxiliary displays angled with respect to each other, and the auxiliary display is oriented on the phone so that, when the phone is attached to the user, the auxiliary display is readable to the user. In accord with one aspect of a preferred embodiment, when the phone receives a call, the auxiliary display shows caller ID information for the call. This caller ID information may include the name and/or telephone number of the caller.

In another aspect of a preferred embodiment, a portable phone has a primary display and an auxiliary display, and the phone comprises two sections that fold together, wherein when the phone is attached to a user, the auxiliary display is readable to the user and, preferably, displays caller ID information of incoming calls. In accord with one aspect of a preferred embodiment, the primary display is covered by the two sections of the phone when it is folded.

In another aspect of a preferred embodiment, a portable phone has a display that comprises two portions that are angled with respect to each other, the display oriented on the phone so that when the phone is attached to a user, one of the portions of the display is readable to the user.

### BRIEF DESCRIPTION OF DRAWINGS

FIG. 1 is a front view of a first embodiment of the phone.
FIG. 2 is a back view of a first embodiment on the phone.
FIG. 3 shows the phone attached to a user.
FIG. 4 is a view of a second embodiment of the phone, shown open.
FIG. 5 is a view of a second embodiment of the phone, shown closed.
FIG. 6. is a front view of a third embodiment of the phone.

### DETAILED DESCRIPTION OF PREFERRED EMBODIMENTS

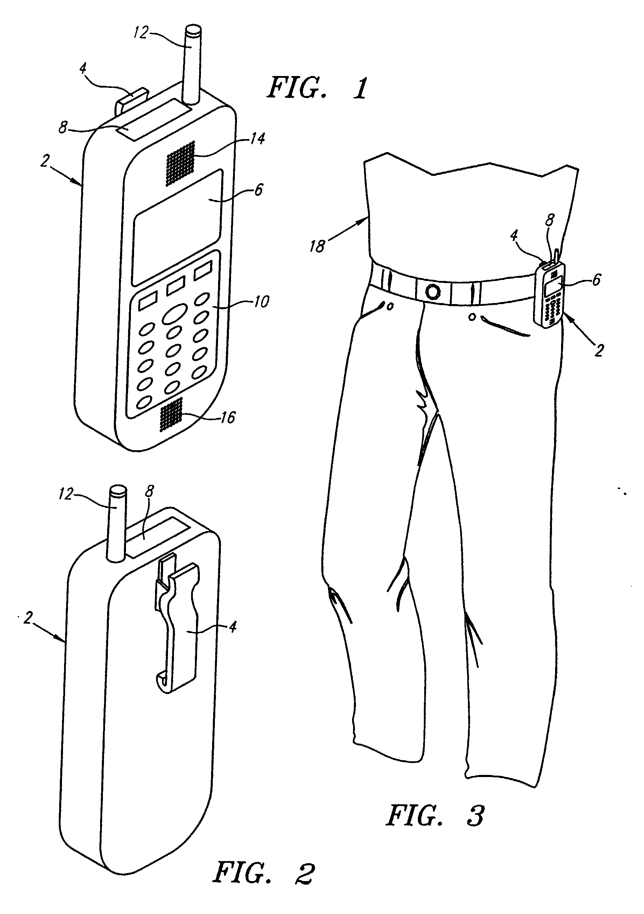

FIGS. 1 and 2 depict one embodiment of the portable phone 2. This portable phone 2 may be a cellular phone, a cordless phone, or any other type of wireless phone. designed for mobility that can be adapted to be carried on a user.

The phone 2 is adapted to detachably attach to a user 18 (as shown in FIG. 3) using an attaching mechanism 4. This attaching mechanism 4 may be a spring-loaded clip on the phone that will attach to a belt, pants, or other article of clothing. Alternatively, the attaching mechanism 4 could be a harness that attaches to the user 18 or the user's clothing, preferably at waist level. The phone 2 could detachably attach to that harness via, for example, a pivot ring that fits into the harness and secures the phone 2 to the user 18. In yet another alternative, the attaching means 4 is a holster that attaches to a user 18 or a user's clothing, the harness being adapted to receive the phone 2 and thus securing it to the user 18. Other types of attaching mechanisms known in the art include armbands and necklaces, which each attach to a user's body and are adapted to receive a phone 2, thereby securing the phone to the user 18. These alternatives are merely examples of an appropriate attaching mechanism 4, and various other attaching mechanisms could be used without departing from the inventive concepts contained herein.

The phone 2 is preferably equipped with the standard components of a portable phone, such as a keypad 10, an antenna 12, a speaker 14, and a microphone 16. The phone 2 also has both a primary display 6 and an auxiliary display 8. The primary display 6 is typically larger than the auxiliary display 8 because it is preferably the main source of information for the user - such as providing menus, an electronic rolodex, date and time, battery level, service availability information, call logs, and messages. Because the keypad 10 provides the means to access and control the functions of the phone 2, the keypad 10 and primary display 6 are preferably both visible simultaneously. This allows a user to receive visual feedback from the primary display 6 when using the keypad 10.

When the phone 2 receives an incoming call, the auxiliary display 8 is preferably adapted to show the caller ID information of the caller if that information is available. The primary display 6 may also be adapted to show caller ID information of incoming calls. This information may include the number from where the call originates, the name of the caller registered at that number, and a time and date stamp. In some instances, the caller ID information will be blocked or otherwise unavailable; therefore, the auxiliary display 8 may not display caller ID information in those cases. Preferably, the auxiliary display 8 is adapted to display alphanumeric characters, allowing it to display caller names as well as numbers. The primary display 6 and auxiliary display 8 may be straight or curved, depending on the desired appearance of the phone.

In addition to caller ID, the auxiliary display 8 may be adapted to perform other functions, such as showing a battery level or a signal strength of the phone 2, indicating whether the phone 2 (such as a cellular phone) is in a roaming mode, and the like. It could also serve as an easily viewable clock by displaying the date and time.

As shown in FIG. 3, the attaching means preferably attaches the phone 2 to the user 18 at the user's waist level - for example, on the user's belt. When the phone 2 is properly attached to a user 18, the auxiliary display 8 is oriented so that the user 18 can read it while standing upright without adjusting the phone. The primary display 6 is not readable by the user 18 unless the user 18 bends the user's body or manually adjusts the phone 2 so that the primary display 6 faces the user - using, for example, the pivoting capabilities of the attaching mechanism 4. Therefore, when the phone 2 is attached to a user 18, the user 18 may read the auxiliary display 8 by simply looking down at the phone 2, without having to move or detach the phone 2 or contort the user's body into an unnatural position.

Because of the geometry of most phones, the primary display 6 and auxiliary display 8 are typically angled more than 45 degrees with respect to each other (usually at approximate right angles); thus, when looking directly at one of these displays, the other is not easily readable, if at all. Typically, when the phone 2 is attached to the user 18 (as shown in FIG. 3), the surface of the phone 2 that is viewable is relatively narrow compared to the other surfaces. Because the auxiliary display 8 may generally be smaller than the primary display 6 - as it typically performs functions that require less display space - it is possible to place the auxiliary display 8 on this narrower surface.

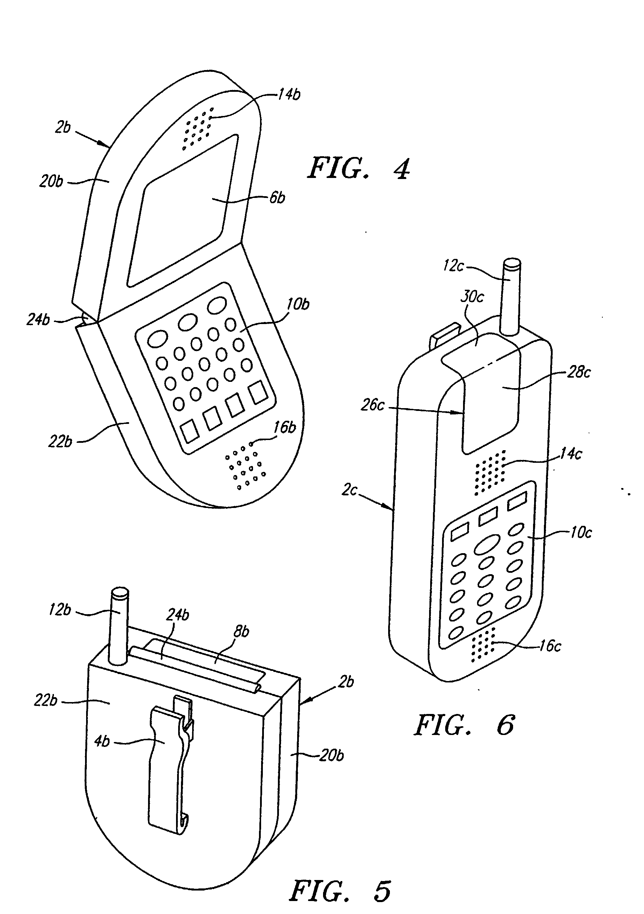

Another embodiment of the portable phone is shown in FIGS. 4 and 5. Like the previous embodiment, the phone 2b also has an antenna 12b, a speaker 14b, and a microphone 16b. This phone 2b is a folding phone, having a first section 20b and a second section 22b that are rotatably attached using a hinge 24b. The manufacture of folding phones of this type is well known in the art.

A phone of this type is usually opened before it is used. FIG. 4 shows the phone 2b open, while FIG. 5 shows the phone 2b closed. When the phone 2b is open, the primary display 6b and keypad 10b are accessible to the user. The primary display 6b and the keypad 10b may also be accessed when the phone is closed by opening the phone, or they may be covered by the first and second sections 20b and 22b, thus protecting them.

The phone 2b is preferably adapted to detachably attach to a user 18, as shown in FIG. 3, using an attaching mechanism 4b. As described for the previous embodiment, the attaching mechanism 4b may be provided in various forms without departing from the inventive concepts herein. Preferably, the phone 2b is adapted to attach to a user 18 when the phone 2b is closed. In the embodiment shown in FIG. 5, the auxiliary display 8b is located near the hinge 24b; however, the location and orientation of the auxiliary display 8b is in part dictated by the design of the attaching mechanism 4b. Whichever way the phone 2b is adapted to attach to a user, the auxiliary display 8b is located on the phone so that its displayed information is oriented in such a way as to be readable by the user 18 when the phone 2b is properly attached, as FIG. 3 illustrates. The auxiliary display 8b operates in this embodiment as described for the previous embodiment.

FIG. 6 shows another embodiment of the phone. In this embodiment, like the others, the phone 2c preferably has a keypad 10c, an antenna 12c, a speaker 14c, and a microphone 16c. This embodiment of the phone 2c, however, has a single display 26c that has a first portion 28c and a second portion 30c. The first portion 28c and the second portion 30c of the display 26c operate as described for the primary display and the auxiliary display, respectively, in the previous two embodiments. The second portion 30c thus preferably shows caller ID information for incoming calls. Also, the phone 2c is adapted to attach to a user 18 as described for the first embodiment.

When the phone 2c is properly attached to a user 18, the second portion 30c of the display 26c is oriented so that the user 18 can read it while standing upright without adjusting the phone. The first portion 28c of the display 26c is not readable by the user 18, unless the user 18 contorts the user's body into an unnatural position or manually adjusts the phone 2c so that the first portion 28c faces the user - using, for example, the pivoting capabilities of the attaching mechanism 4c.

A portable phone having an auxiliary display that is readable when attached to a user has thus been disclosed. It will be apparent, however, that various changes may be made to the phone without departing from the spirit and scope of the invention, the structure hereinbefore described being merely preferred or exemplary embodiments thereof. Therefore, the invention is not to be restricted or limited except in accordance with the following claims and their legal equivalents.

## Claims

1. A wireless phone capable of being carried by a user, the phone comprising:
a primary display; and
an auxiliary display, angled with respect to the primary display;
the phone being capable of detachably attaching to the user so that, when the phone is in the attached position on the user, the auxiliary display is viewable to the user.

2. The phone of claim 1, wherein the primary display of the phone is angled at least 45 degrees with respect to the auxiliary display.

3. The phone of claim 1, wherein the phone is capable of receiving an incoming call from a caller, the incoming call having caller ID information, and the auxiliary display is capable of displaying the caller ID information of the incoming call.

4. The phone of claim 3, wherein the caller ID information includes at least one of:
an originating phone number of the incoming call, and a name of the caller assigned to the originating phone number.

5. The phone of claim 1, wherein the auxiliary display is adapted to display alphanumeric characters.

6. The phone of claim 1, wherein the auxiliary display is a liquid crystal display.

7. The phone of claim 1, wherein the phone is capable of being attached to a belt on the user.

8. The phone of claim 1, wherein the auxiliary display is capable of displaying information about the phone including at least one of: a battery level of the phone, a signal strength of the phone, and a roaming mode of the phone.

9. A portable phone having a first section rotatably attached to a second section, said first section being rotatable with respect to said second section such that said first section makes contact with said second section in a closed position, said phone further comprising:
a primary display on said first section of the phone; and
an auxiliary display viewable to a user when the phone is in the closed position.
i

10. The phone of claim 9, wherein when the first section of the phone is rotated to contact the second section of the phone, the primary display is covered by the second section.

11. The phone of claim 9, wherein the phone is adapted to receive an incoming call from a caller, the incoming call having caller ID information, and the auxiliary display is capable of displaying the caller ID information of the incoming call.

12. The phone of claim 11, wherein the caller ID information includes at least one of:
an originating phone number of the incoming call, and a name of the caller assigned to the originating phone number.

13. The phone of claim 9, wherein the auxiliary display is adapted to display alphanumeric characters.

14. The phone of claim 9, wherein the phone is capable of detachably attaching to the user when in the closed position.

15. The phone of claim 14, wherein said phone is capable of being attached to a belt on the user.

16. The phone of claim 9, wherein the auxiliary display is capable of displaying information about the phone including at least one of: a battery level of the phone, a signal strength of the phone, and a roaming mode of the phone.

17. A wireless phone capable of being carried by a user, the phone comprising:
a display having a first portion and a second portion, said second portion being angled with respect to said first portion; and
said phone being capable of detachably attaching to the user so that, when the phone is in the attached position on the user, said second portion of the display is viewable to the user.

18. The phone of claim 17, wherein said first portion of the display is angled at least 45 degrees with respect to said second portion of said display.

19. The phone of claim 17, wherein the phone is adapted to receive an incoming call from a caller, the incoming call having caller ID information, and said second portion of the display is capable of showing the caller ID information of the incoming call.

20. The phone of claim 19, wherein the caller ID information includes at least one of:
an originating phone number of the incoming call, and a name of the caller assigned to the originating phone number.

21. The phone of claim 17, wherein said second portion of the display is capable of displaying alphanumeric characters.

22. The phone of claim 17, wherein said phone is capable of being attached to a belt on the user.

23. The phone of claim 17, wherein said second portion of the display is capable of displaying information about the phone including at least one of: a battery level of the phone, a signal strength of the phone, and a roaming mode of the phone.
